# EUROPEAN PATENT SPECIFICATION

(11) **EP 3 927 279 B1**
(45) Date of publication and mention of the grant of the patent: **24.07.2024**
(21) Application number: 20711248.3
(22) Date of filing: 17.02.2020
(51) Int. Cl.: A61C 13/08

(54) **PROSTHETIC TOOTH, METHOD FOR MANUFACTURING THEREOF, AND USE OF THE SAME**
ZAHNPROTHESE, DEREN HERSTELLUNGSMETHODE, UND DEREN ANWENDUNG
DENT PROTHÉTIQUE, SA MÉTHODE DE FABRICATION ET SON UTILISATION

(30) Priority: 18.02.2019 GB 201902213
(43) Date of publication of application: 29.12.2021
(73) Proprietor: Davis, Schottlander & Davis Ltd, Letchworth Garden City Hertfordshire SG6 2WD (GB)
(72) Inventor: SCHOTTLANDER, Brian, Hertfordshire SG6 2WD (GB)
(74) Representative: Lock, Graham James
(86) International application number: PCT/GB2020/050367
(87) International publication number: WO 2020/169952

(56) References cited:
- CH-A- 87 670
- DE-A1- 2 063 753
- DE-U1- 8 022 674
- GB-A- 2 196 856
- JP-A- 2013 138 752
- KR-B1- 101 695 584
- KR-B1- 101 695 586
- KR-B1- 101 695 587
- US-A- 1 241 854
- US-A- 2 585 857
- US-A- 3 762 049
- US-A- 638 019
- US-A1- 2013 171 588

## Description

### FIELD OF THE INVENTION

The present invention relates to one or more new teeth for production of a denture as well as a denture comprising the teeth. Novel techniques for positioning and fixing teeth into a denture plate are described.

### BACKGROUND OF THE INVENTION

Dentures are prosthetic devices constructed to replace missing teeth. Complete dentures replace all of the teeth in the upper and/or the lower jaw, whereas partial dentures only replace some of the teeth in the jaw concerned. For example, partial dentures may replace one or more front teeth and/or one or more of the posterior teeth. Generally, they are supported by the surrounding soft and hard tissues of the oral cavity. Complete dentures can also be implant supported, whereby the denture attaches to one or more dental implants fitted into the alveolar bone of the mandible or maxilla (lower or upper jaw). Conventional dentures are removable as and when required.

In natural human dentition, the tooth distribution in each quadrant of the mouth consists of three front teeth, and four or five posterior teeth including two pre-molars and two or three molars. When constructing a complete denture, either three or more typically four posterior teeth are used in each quadrant. When constructing a partial denture, the number of teeth used depends on factors such as the number of remaining natural teeth and the space available. The third molar tooth is not always present in the natural human dentition, and is not usually included in dentures.

Dentures should be retentive, comfortable and provide support for the cheeks and lips. They should allow effective mastication, acceptable aesthetics, clear phonetics, and contribute to the wearer's confidence and self-esteem.

The construction of complete dentures involves a number of clinical and laboratory stages.

In traditional denture construction, impressions of one or both jaws are first taken by the clinician. These are commonly referred to as primary impressions.

Into these impressions, technicians at a dental laboratory pour a material, such as plaster, to form a model representing the shape and contours of the soft and hard tissue area of the jaws concerned as well as any remaining natural teeth. Once solidified, this forms a model of the upper and/or lower jaws of the individual patient. The dental technician may make custom made special trays with which the clinician takes secondary impressions for greater accuracy and if so the dental technician will pour second models. Alternatively the models in either case may be made by digital means including 3D printing.

The dental technician then constructs on the models of the upper and lower jaw a bite rim/block out of wax, positioned to replicate the position of the missing teeth and including the extant teeth. These are made of solid wax with the extant teeth in the plaster to approximate or record approximately the correct dimensions but without any anatomical modelling. They are then sent to the clinician to make various adjustments so as to give information to the technician about facial height, anterior tooth position, lip support, occlusal plane etc., and to mark various anatomical landmarks. These are then returned to the dental laboratory, where the dental technician mounts the models and bite rims on an articulator (an articulator is a hinged metal piece of equipment used to represent the movements of the jaws in the dental laboratory) together with a model of the teeth in the opposing arch if these are still extant.

The dental technician then models in wax the plate that will form the denture itself and teeth are added to it in the functionally and aesthetically correct positions. This wax model with teeth is referred to as a denture try-in. The clinician checks the try-in in the patient's mouth against either the denture or the try-in of the opposing arch or the existing teeth in the opposing arch, with regard to the appearance, phonetics, and function. Adjustments are made by the clinician where necessary.

Once the try-in has been returned to the dental laboratory, the dental technician then finishes any modelling work on the try-in that may be needed in order to get a true representation of the finished denture. The technician then takes the wax denture with teeth attached and invests it into plaster contained in a metal flask, taking care to put a separator film between the two halves of the flask in order that it may be opened when set. Once set, the dental technician opens the two halves of the flask and, using boiling water, removes the wax from the flask leaving the teeth embedded into one half. The teeth remain in the flask where they are held in position by the plaster and there is hollow space corresponding to where the wax has been removed. An acrylate dough is then packed into the hollow space in the flask, and it is closed tight in a conventional manner and heated to cure the acrylate dough forming the denture plate material. Once cured, the plaster is broken away and the denture is cleaned and polished before sending back to the clinician to fit into the patient's mouth.

In recent years, modern technology has been utilised so that one or more of the stages of the traditional denture production method is implemented digitally, in order to reduce the overall method time.

For example, once an impression of a patient's mouth or patient's jaw is taken, it can be scanned and recorded in a digital form for example on a device such as a computer in the dental laboratory. In some cases, the impression may be scanned directly at the chairside and the data transmitted electronically to the dental laboratory. Alternatively, a model may be produced from this impression and may be scanned and recorded in a digital form for example on a device such as a computer either in the laboratory or directly at the chairside. The components of the denture are then positioned digitally, by inputting additional information including measurements of the anatomical features and dimensions of the patient's mouth into a device such as a computer, and using specialist software to design the denture electronically. Such a method avoids the laborious steps of physically setting up the teeth and also enables different occlusal schemes to the tried out virtually using the software.

The denture plate is then milled out of wax or other material, leaving space for precisely fitting teeth to be inserted into the wax to form the try-in. As an alternative, both the denture plate and teeth can be milled together out of wax or other material. This is then sent to a clinician for checking in the patient's mouth, following which the try-in can be invested into plaster contained in a metal flask, as in the traditional manner described above.

In an alternative shorter method, the step of producing and fitting a try-in is completely omitted. In either case the denture is produced directly from the digital design by milling the finished denture plate from prepolymerised plastic or 3D printing, leaving space for the individual teeth to be fixed in with an adhesive, such as an acrylic adhesive material. Alternatively, both the individual teeth themselves as well as the denture plate are produced by milling or 3D printing, and the teeth and base are fixed together using adhesive. As an alternative, both the denture plate and teeth can be milled together out of tooth coloured acrylic or 3D printed using tooth coloured material and the denture plate itself can be stained or painted pink.

In addition to the traditional methods of taking impressions of the contours of the mouth using impression material, methods have also been developed to take digital impressions of a patient's jaw, so that physical models are not even required. Together with these methods for taking impressions of the mouth additional information including recording the occlusal plane, the lip line, the position of the front teeth, other measurements of the anatomical features and dimensions of the patient's mouth must be input into the computer.

However the procedures to carry this out can be very laborious. For instance, Dentca Inc. in US8998615 claims a method of obtaining a gum impression of a patient's mouth and measuring jaw relations, a dental impression tray assembly including a lower tray and an upper tray to fabricate a denture, is used. The lower tray includes a first piece and a pair of second pieces and the upper tray includes a third piece and fourth piece. The method includes inserting the lower tray loaded with an impression material into the mouth to take an impression; taking out the lower tray from the mouth and cutting the impression material along a borderline between the first piece and the pair of second pieces; separating the first piece from the pair of second pieces; attaching an intra-oral tracer to the first piece and inserting the first piece, to which the intra-oral tracer is attached, and the third piece into the mouth to measure the jaw relations.

The try-in or finished denture may be designed and produced with the aid of computer design software as outlined in the steps above.

For any of the above methods which involve the separate production of the denture plate and teeth and adhesive bonding together of the components, the individual teeth need to be fixed into pre-milled or 3D printed spaces in the milled acrylic or 3D printed denture plate. This positioning of the teeth is susceptible to twisting and/or rotation within the spaces, so that the exact position of the individual teeth in the final denture may not be correct, leading to problems in terms of occlusion or appearance.

In addition, the step of positioning the teeth together in the denture plate is quite difficult to achieve in practice since it is difficult to ensure the angles of entry into the denture plate are correct for all of the teeth when placed together.

Furthermore, the shape of known prosthetic teeth have surfaces which meet at angles which are not correct for inserting into pre-prepared spaces in a denture plate since this was never the objective when the teeth were first designed.

Relevant prior art is exemplified by DE 80 22 674 U1.

Therefore, there remains a need for improved prosthetic teeth which can be accurately and more easily properly positioned in a denture, as well as a method for establishing correct alignment of prosthetic teeth in a denture.

### SUMMARY OF THE INVENTION

The invention is defined in appended claims 1, 12, and 14. Preferred embodiments are defined in the dependent claims.

In first aspect, the invention provides a prosthetic tooth for a denture wherein the tooth comprises a lingual or palatal surface, an opposing vesibular surface, opposing proximal surfaces, an incisal or occlusal surface and an opposing apical surface, wherein a pocket or slot is defined in the apical surface.

Preferably, the apical surface is curved. In this regard, the apical surface extends from the lingual or palatal surface to the vesibular surface of the tooth and is preferably concave.

Preferably, the tooth has proximal surfaces at opposing sides of the tooth and the pocket or slot is positioned substantially equally between the proximal surfaces of the tooth.

Preferably, the pocket or slot has an open end facing the apical surface of the tooth. Preferably, the pocket or slot has an opposing planar end defined in the tooth. Preferably, the end of the pocket or slot defined in the tooth is substantially parallel with the incisal or occlusal surface of the tooth.

Preferably, the pocket or slot has a width equal to about one third of the distance between the proximal surfaces of the tooth.

Preferably, the pocket or slot has a length substantially perpendicular to its width and the length of the pocket or slot is preferably greater than its width.

Preferably, the pocket or slot has a longitudinal axis parallel to its length extending from adjacent the vestibular surface of the tooth to adjacent the lingual or palatal surface (ie from front to back of the tooth).

In one embodiment, the pocket or slot is defined in only the apical surface of the tooth.

In another embodiment, the pocket or slot extends through the lingual or palatal surface of the tooth.

In another embodiment, the pocket or slot extends only partially through the lingual or palatal surface of the tooth. According to this embodiment, the pocket or slot has a more than one depth.

Advantageously, the presence of the pocket or slot makes it easier to determine whether the tooth is positioned correctly when the tooth is aligned with a denture plate and assists with determining whether the tooth has twisted or tilted.

In addition, the invention provides the advantage that the revised design of the teeth reduces the bulk of teeth so that removing excess tooth is less often going to be necessary. This reduces the time required for shaping the teeth and reduces waste material.

A further advantage is that the strength of the bond between teeth of the invention and a denture base is improved.

In a second aspect, the invention provides a set of teeth comprising a plurality of teeth according to the invention.

Preferably, the set of teeth comprises one or more upper and / or lower teeth. Preferably, the set of teeth comprises one or more of central, lateral, cuspid, first cuspid, second cuspid, first molar and second molar teeth. Preferably, the set of teeth comprises anterior and /or posterior teeth. Preferably, the set of teeth comprises anterior, pre-molar and molar teeth. Preferably, the set of teeth comprises all of central, lateral, cuspid, first bicuspid, second bicuspid, first molar and second molar teeth.

In a further aspect, the invention provides a method for manufacturing a tooth of the invention which comprises the step of moulding a tooth having a pocket or slot defined therein. Alternatively, the method comprises the steps of moulding a tooth and milling a pocket or slot into the moulded tooth. Alternatively, the method comprises the steps of three dimensional printing a tooth having a pocket or slot defined therein, or three dimensional printing a tooth and milling a pocket or slot in the tooth. Alternatively, the method comprises the steps of milling a tooth having a pocket or slot defined therein.

In a further aspect, the invention provides a denture comprising a denture plate and one or more teeth of the invention.

In a further aspect, the invention provides a method for correctly positioning teeth in a denture which comprises providing one or more teeth of the invention and a denture plate and aligning the teeth with the denture plate.

### BRIEF DESCRIPTION OF THE FIGURES

The invention will now be described with reference to the accompanying drawings, in which:
Figure 1 shows a rear view of a tooth of the invention having a pocket or slot defined therein. The tooth is an anterior tooth and the pocket or slot is seen together with the apical surface and the lingual or palatal surface.
Figure 2 shows a plan view of a tooth of the invention having a pocket or slot defined therein. The tooth is an anterior tooth and the pocket or slot is seen together with the apical surface.
Figure 3 shows a rear view of a first alternative embodiment of a tooth of the invention having a pocket or slot defined therein. The tooth is a pre-molar tooth and the pocket or slot is seen together with the apical surface, the lingual or palatal surface, and the occlusal surface.
Figure 4 shows an alternative view of a first alternative embodiment a tooth of the invention having a pocket or slot defined therein. The tooth is a pre-molar tooth and the pocket or slot is seen together with the apical surface, and the lingual or palatal surface.
Figure 5 shows a plan view of a first alternative embodiment a tooth of the invention having a pocket or slot defined therein. The tooth is a pre-molar tooth and the pocket or slot is seen together with the apical surface.
Figure 6 shows a perspective view of a second alternative embodiment a tooth of the invention having a pocket or slot defined therein. The tooth is a molar tooth and the pocket or slot is seen together with the apical surface, and the lingual or palatal surface.
Figure 7 shows an alternative view of a second alternative embodiment a tooth of the invention having a pocket or slot defined therein. The tooth is a molar tooth and the pocket or slot is seen together with the apical surface, and the lingual or palatal surface.
Figure 8 shows a plan view of a second alternative embodiment a tooth of the invention having a pocket or slot defined therein. The tooth is a molar tooth and the pocket or slot is seen together with the apical surface.
Figure 9 shows a set of teeth according to the invention. The set of teeth includes anterior teeth.
Figure 10 shows an alternative embodiment of a set of teeth according to the invention. The set of teeth includes posterior teeth.

### DETAILED DESCRIPTION OF THE INVENTION

The following definitions shall apply throughout the specification and the appended claims.

The singular forms "a," "an," and "the" include plural reference unless the context clearly dictates otherwise.

Within the context of the present specification, the term "comprises" is taken to mean "includes" or "contains", i.e. other integers or features may be present, whereas the term "consists of" is taken to mean "consists exclusively of".

Within the present specification, the term "about" means plus or minus 20%; more preferably plus or minus 10%; even more preferably plus or minus 5%; most preferably plus or minus 2%.

Within the present specification, the term "denture" means a prosthetic device constructed to replace missing teeth; a denture consists of a denture plate that is supported by the soft and hard tissues of the oral cavity, and artificial denture teeth that restore aesthetics and function for a patient.

Within the present specification, the term "slot" means a depression, indent or groove defined in a tooth. A slot is a depression with a uniform cross-section along its length and generally longer than it is wide or deep. A "pocket" is a depression, indent or groove that does not meet the criteria to be considered a slot.

Within the present specification, the term "apical" refers to the direction towards the root(s) or apex(es) of a tooth (the apices), as opposed to coronal, which refers to the direction towards the crown of a tooth.

Within the present specification, the term "lingual" refers to the side of a tooth which in situ would be adjacent to (or the direction towards) the tongue, as opposed to vestibular which refers to the side of a tooth adjacent to (or the direction towards) the inside of the cheek or lips.

Within the present specification, the term "palatal" refers to the side of a tooth which in situ would be adjacent to (or the direction towards) the palate, as opposed to vestibular which refers to the side of a tooth adjacent to the inside of the cheek or lips.

Within the present specification, the term "vestibular" refers to the side of a tooth which in situ would be adjacent to (or the direction towards) the inside of the cheeks or lips, as opposed to lingual or palatal, which refer to the side of a tooth adjacent to (or the direction towards) the tongue or palate, respectively.

Within the present specification, the term "proximal" refers to the surfaces of teeth that which in situ would be adjacent to another tooth.

Within the present specification, the term "incisal surface" refers to the biting surface of the anterior teeth ie the teeth toward the front of the mouth.

Within the present specification, the term "occlusal surface" refers to biting surfaces of the posterior teeth ie the teeth towards the back of the mouth.

Unless defined otherwise, all technical and scientific terms used herein have the same meanings as commonly understood by one of ordinary skill in the art.

Embodiments have been described herein in a concise way. It should be appreciated that features of these embodiments may be variously separated or combined within the invention.

In a method for production of a denture, the teeth of the denture are inserted into a previously manufactured denture plate so that they may be positioned as a block into pre-milled or three dimensionally printed spaces in the denture plate thus avoiding the problem of individual teeth twisting or rotating within the spaces. However, this is difficult to achieve.

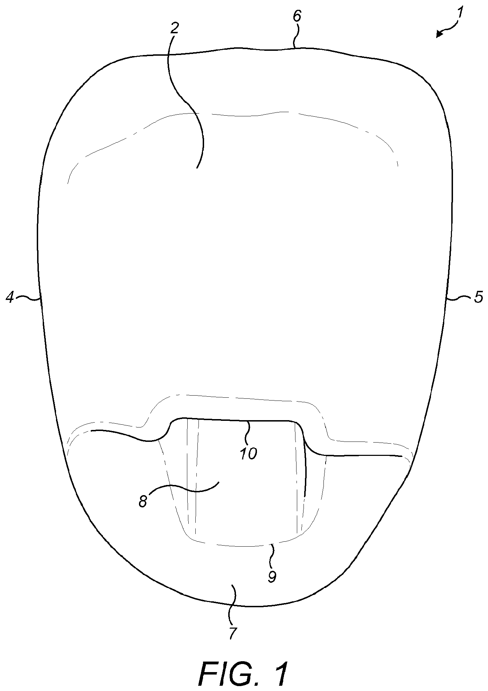

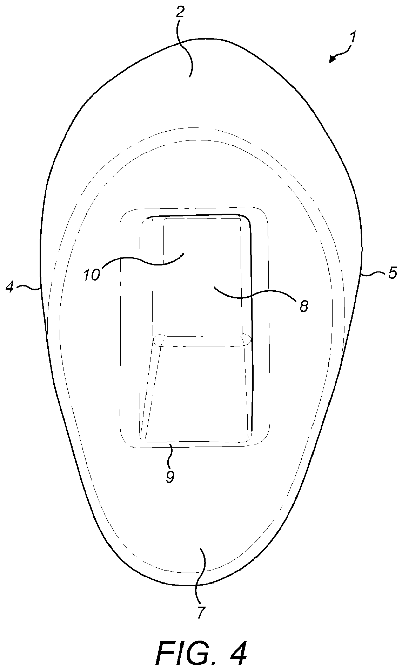

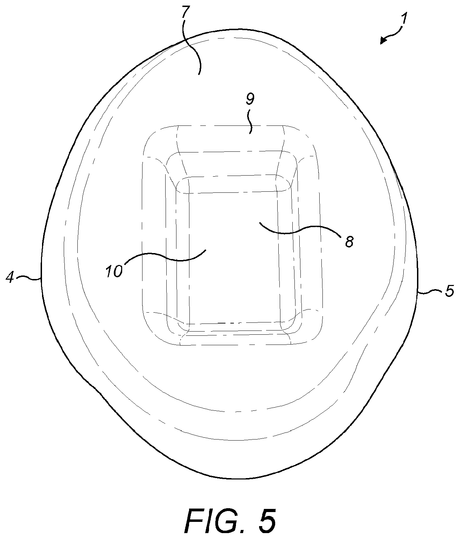

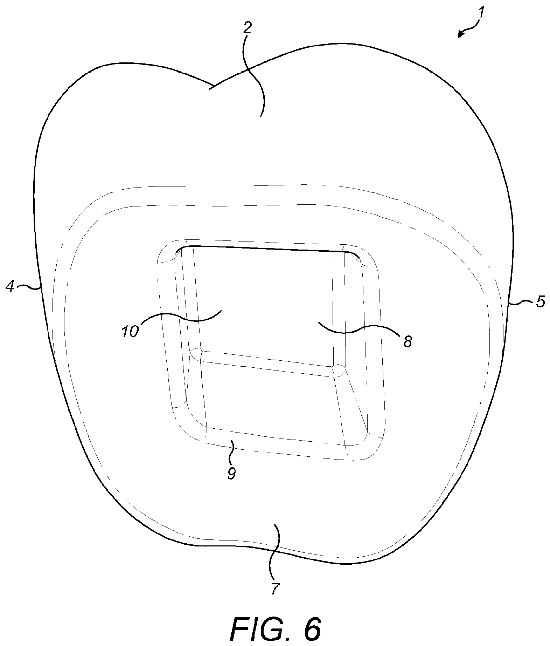

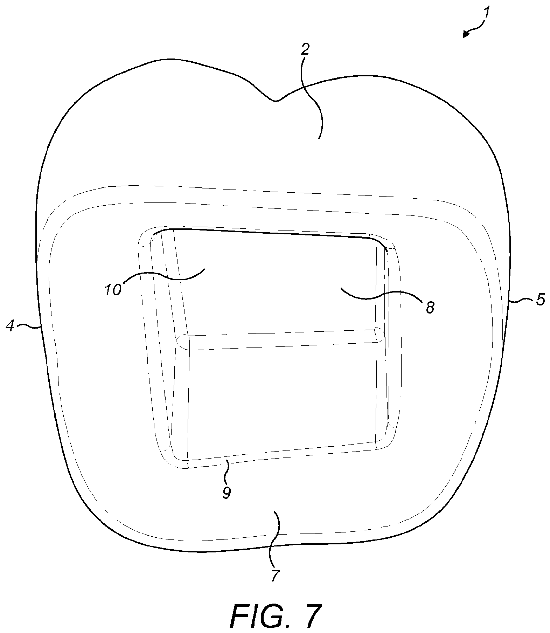

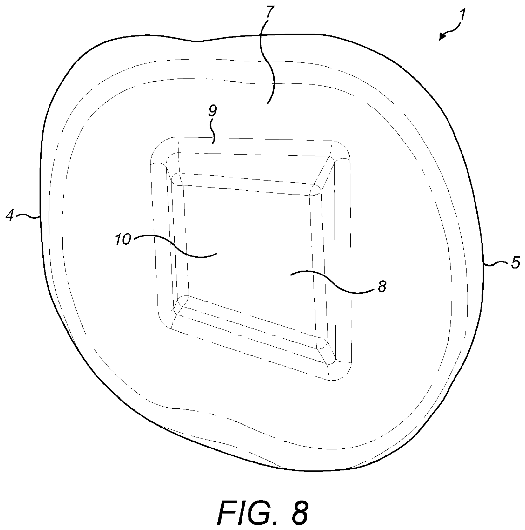

To assist in positioning the teeth correctly, with reference to Figures 1 to 8, the invention provides a prosthetic tooth (1) wherein the tooth comprises a lingual or palatal surface (2), an opposing vesibular surface (3), opposing proximal surfaces (4,5), an incisal or occlusal surface (6) and an opposing apical surface (7), wherein a pocket or slot (8) is defined in the apical surface (7). The pocket or slot (8) makes it easier to determine whether the tooth (1) is positioned correctly when the tooth (1) is aligned with a denture plate and assists with determining whether the tooth (1) has twisted or tilted.

The tooth (1) has proximal surfaces (4,5) at opposing sides of the tooth (1) and the pocket or slot (8) is positioned substantially equally between the proximal surfaces (4,5) of the tooth (1).

The pocket or slot (8) has an open end (9) facing a curved apical surface (7) of the tooth (1) and an opposing planar end (10) defined in the tooth (1) which is substantially rectangular or trapezoid. The end (10) of the pocket or slot (8) defined in the tooth (1) is substantially parallel with the incisal or occlusal surface (6) of the tooth (1).

The pocket or slot (8) has a width equal to about one third of the distance between the proximal surfaces (4,5) of the tooth (1) and a length substantially perpendicular to its width, wherein in one embodiment, the length of the slot (8) is greater than its width.

The pocket or slot (8) has a longitudinal axis parallel to its length extending from adjacent the vestibular surface (3) of the tooth (1) to adjacent the lingual or palatal surface (2) (i.e. from front to back of the tooth (1)).

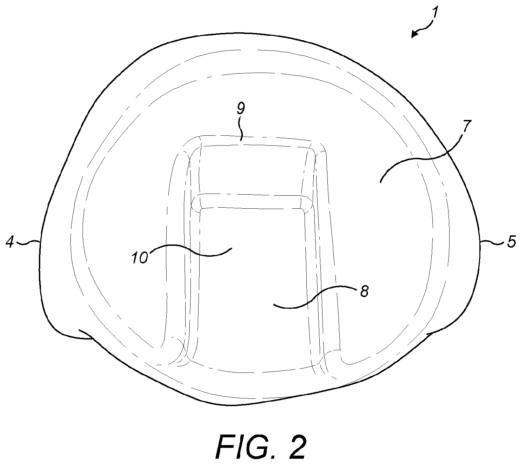

In a first embodiment shown in Figures 1 and 2, the pocket or slot (8) is defined in the apical surface (7) of the tooth (1) and extends through the lingual or palatal surface (2) of the tooth (1) too.

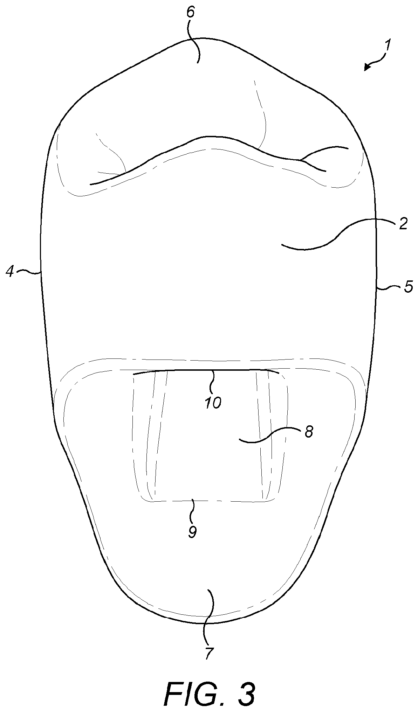

In second and third embodiments shown in Figures 3 to 8, the pocket or slot (8) is defined in only the apical (7) surface of the tooth (1).

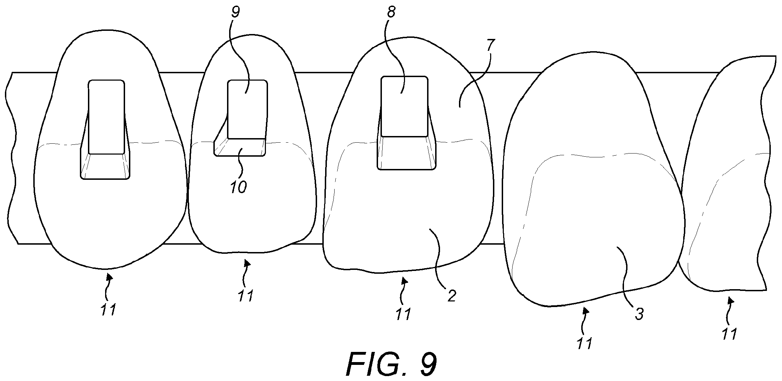

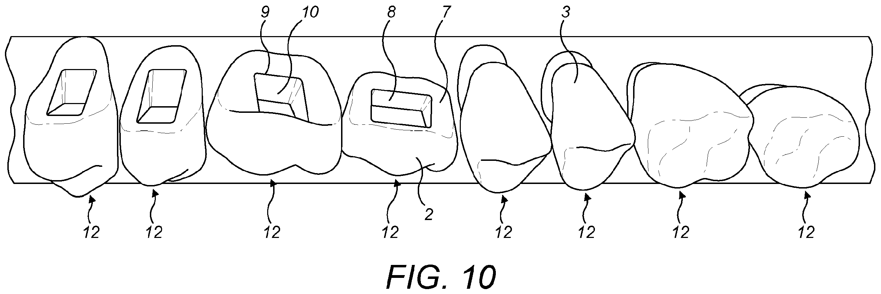

As shown in Figures 9 and 10, a set of teeth (1) of the invention comprises anterior teeth (1) and posterior teeth (1). In one embodiment, the set of teeth comprises anterior teeth (11). In an alternative embodiment the set of teeth comprises posterior teeth (12). In an alternative embodiment the set of teeth comprises anterior teeth (11) and posterior teeth (12). In another embodiment, it comprises anterior, pre-molar and molar teeth (1). In another embodiment, it comprises central, lateral, cuspid, first bicuspid, second bicuspid, first molar and second molar teeth (1).

A denture of the invention comprises a denture plate and one or more teeth (1) of the invention.

The tooth (1) of the invention is manufactured by a method which includes the step of moulding the tooth (1) and a pocket or slot (7) is defined therein. Alternatively, the method comprises the steps of moulding a tooth (1) and milling a pocket or slot (7) into the moulded tooth (1). Alternatively, the method comprises the steps of three dimensional printing a tooth (1) having a pocket or slot (7) defined therein, or three dimensional printing a tooth (1) and milling a pocket or slot (7) in the tooth. Alternatively, the method comprises the steps of milling a tooth (1) having a pocket or slot (7) defined therein.

## Claims

1. A prosthetic tooth (1) for a denture wherein the tooth comprises a lingual or palatal surface (2), an opposing vestibular surface (3), opposing proximal surfaces (4, 5), an incisal or occlusal surface (6) and an opposing apical surface (7), wherein a pocket or slot (8) is defined in the apical surface (7) and **characterised in that** the pocket or slot (8) has an open end (9) facing the apical surface (7 ) of the tooth (1) and an opposing planar end (10) defined in the tooth and the end (10) of the pocket or slot defined in the tooth is substantially rectangular or trapezoid.

2. The tooth (1) according to claim 1, wherein the apical surface (7) is curved.

3. The tooth (1) according to claim 1 or 2, wherein the tooth has proximal surfaces (4, 5) at opposing sides of the tooth and the pocket or slot is positioned substantially equally between the proximal surfaces of the tooth.

4. The tooth (1) according to any one of the preceding claims, wherein the end (10) of the pocket or slot (8) defined in the tooth (1) is substantially parallel with the incisal or occlusal surface (6) of the tooth (1).

5. The tooth (1) according to any one of the preceding claims, wherein the pocket or slot (8) has a width equal to about one third of the distance between the proximal surfaces (4, 5) of the tooth (1).

6. The tooth (1) according to any one of the preceding claims, wherein the pocket or slot (8) has a length substantially perpendicular to its width and the length of the slot (8) is greater than its width.

7. The tooth (1) according to any one of the preceding claims, wherein the pocket or slot (8) has a longitudinal axis parallel to its length extending from adjacent the vestibular surface (3) of the tooth to adjacent the lingual or palatal surface (2).

8. The tooth (1) according to any one of the preceding claims, wherein the pocket or slot (8) is defined in only the apical surface (7) of the tooth (1).

9. The tooth (1) according to any one of the preceding claims, wherein the pocket or slot (8) extends through the lingual or palatal surface (2) of the tooth (1).

10. A set of teeth (1) comprising a plurality of teeth (1) according to any one of the preceding claims; optionally wherein the set of teeth comprises upper and / or lower teeth.

11. The set of teeth (1) according to claim 10, wherein the set of teeth (1) comprises one or more of central, lateral, cuspid, first bicuspid, second bicuspid, first molar and second molar teeth.

12. A method for manufacturing a tooth (1) according to any one of claims 1 to 9, wherein the method comprises the step of moulding a tooth having a pocket or slot (8) defined therein or three dimensionally printing a tooth (1) having a pocket or slot (8) defined therein, or milling a tooth (1) having a pocket or slot (8) defined therein, or the steps of moulding or three dimensionally printing a tooth (1) and milling a pocket or slot (8) into the tooth.

13. A denture comprising a denture plate and one or more teeth (1) according to any one of claims 1 to 9.

14. A method for correctly positioning teeth (1) in a denture which comprises providing one or more teeth (1) according to any one of claims 1 to 9 and a denture plate and aligning the teeth (1) with the denture plate.

## Patentansprüche

1. Prothetischer Zahn (1) für ein Gebiss, worin der Zahn eine linguale oder palatinale Oberfläche (2), eine davon abgewandte vestibuläre Oberfläche (3), voneinander abgewandte proximale Oberflächen (4, 5), eine Inzisal- oder Okklusaloberfläche (6) und eine davon abgewandte apikale Oberfläche (7) aufweist, worin eine Tasche oder ein Schlitz (8) in der apikalen Oberfläche (7) definiert ist, und
**dadurch gekennzeichnet, dass**
die Tasche oder der Schlitz (8) ein offenes Ende (9), das der apikalen Oberfläche (7) des Zahns zugewandt ist, und ein davon abgewandtes planes Ende (10) aufweist, das in dem Zahn definiert ist, und das Ende (10) der Tasche oder des Schlitzes, das in dem Zahn definiert ist, im Wesentlichen rechteckig oder trapezförmig ist.

2. Zahn (1) nach Anspruch 1, worin die apikale Fläche (7) gekrümmt ist.

3. Zahn (1) nach Anspruch 1 oder 2, worin der Zahn proximale Flächen (4, 5) an voneinander abgewandten Seiten des Zahns aufweist und die Tasche oder der Schlitz im Wesentlichen gleichmäßig zwischen den proximalen Flächen des Zahns angeordnet ist.

4. Zahn (1) nach einem der vorstehenden Ansprüche, worin das Ende (10) der im Zahn (1) definierten Tasche oder des Schlitzes (8) im Wesentlichen parallel zur Inzisal- oder Okklusaloberfläche (6) des Zahns (1) verläuft.

5. Zahn (1) nach einem der vorstehenden Ansprüche, worin die Tasche oder der Schlitz (8) eine Breite aufweist, die etwa einem Drittel des Abstands zwischen den proximalen Flächen (4, 5) des Zahns (1) entspricht.

6. Zahn (1) nach einem der vorstehenden Ansprüche, worin die Tasche oder der Schlitz (8) eine Länge hat, die im Wesentlichen senkrecht zu seiner Breite ist, und die Länge des Schlitzes (8) größer ist als seine Breite.

7. Zahn (1) nach einem der vorstehenden Ansprüche, worin die Tasche oder der Schlitz (8) eine zu ihrer Länge parallele Längsachse aufweist, die sich von der vestibulären Oberfläche (3) des Zahns bis zur lingualen oder palatinalen Oberfläche (2) erstreckt.

8. Zahn (1) nach einem der vorstehenden Ansprüche, worin die Tasche oder der Schlitz (8) nur in der apikalen Oberfläche (7) des Zahns (1) definiert ist.

9. Zahn (1) nach einem der vorstehenden Ansprüche, worin sich die Tasche oder der Schlitz (8) durch die linguale oder palatinale Oberfläche (2) des Zahns (1) erstreckt.

10. Satz von Zähnen (1), welcher mehrere Zähne (1) nach einem der vorstehenden Ansprüche umfasst, wahlweise worin der Satz von Zähnen obere und/oder untere Zähne umfasst.

11. Satz von Zähnen (1) nach Anspruch 10, worin der Satz von Zähnen (1) einen oder mehrere von zentralen Zähne, lateralen Zähne, Eckzähnen, ersten Prämolaren, zweiten Prämolaren, ersten Molaren und zweiten Molaren umfasst.

12. Verfahren zur Herstellung eines Zahns (1) nach einem der Ansprüche 1 bis 9, wobei das Verfahren den Schritt des Formens eines Zahns mit einer darin definierten Tasche oder einem darin definierten Schlitz (8) oder des dreidimensionalen Druckens eines Zahns (1) mit einer darin definierten Tasche oder einem darin definierten Schlitz (8) oder des Fräsens eines Zahns (1) mit einer darin definierten Tasche oder einem darin definierten Schlitz (8) oder die Schritte des Formens oder dreidimensionalen Druckens eines Zahns (1) und des Fräsens einer Tasche oder eines Schlitzes (8) in den Zahn umfasst.

13. Zahnersatz mit einer Gebissplatte und einem oder mehreren Zähnen (1) nach einem der Ansprüche 1 bis 9.

14. Verfahren zum korrekten Positionieren von Zähnen (1) in einem Gebiss, das das Bereitstellen eines oder mehrerer Zähne (1) nach einem der Ansprüche 1 bis 9 und einer Gebissplatte und das Ausrichten der Zähne (1) mit der Gebissplatte umfasst.

## Revendications

1. Dent (1) prothétique pour une prothèse dentaire dans laquelle la dent comprend une surface linguale ou palatine (2), une surface vestibulaire (3) opposée, des surfaces proximales (4, 5) opposées, une surface incisale ou occlusale (6) et une surface apicale (7) opposée, dans laquelle une poche ou fente (8) est définie dans la surface apicale (7) et
**caractérisée en ce que** la poche ou fente (8) a une extrémité ouverte (9) faisant face à la surface apicale (7) de la dent (1) et une extrémité (10) planaire opposée définie dans la dent et l'extrémité (10) de la poche ou fente définie dans la dent est sensiblement rectangulaire ou trapézoïdale.

2. Dent (1) selon la revendication 1, dans laquelle la surface apicale (7) est incurvée.

3. Dent (1) selon la revendication 1 ou 2, dans laquelle la dent a des surfaces proximales (4, 5) au niveau de côtés opposés de la dent et la poche ou fente est positionnée sensiblement également entre les surfaces proximales de la dent.

4. Dent (1) selon l'une quelconque des revendications précédentes, dans laquelle l'extrémité (10) de la poche ou fente (8) définie dans la dent (1) est sensiblement parallèle à la surface incisive ou occlusale (6) de la dent (1).

5. Dent (1) selon l'une quelconque des revendications précédentes, dans laquelle la poche ou fente (8) a une largeur égale à environ un tiers de la distance entre les surfaces proximales (4, 5) de la dent (1) .

6. Dent (1) selon l'une quelconque des revendications précédentes, dans laquelle la poche ou fente (8) a une longueur sensiblement perpendiculaire à sa largeur et la longueur de la fente (8) est supérieure à sa largeur.

7. Dent (1) selon l'une quelconque des revendications précédentes, dans laquelle la poche ou fente (8) a un axe longitudinal parallèle à sa longueur s'étendant d'une position adjacente à la surface vestibulaire (3) de la dent à une position adjacente à la surface linguale ou palatine (2).

8. Dent (1) selon l'une quelconque des revendications précédentes, dans laquelle la poche ou fente (8) est définie dans seulement la surface apicale (7) de la dent (1).

9. Dent (1) selon l'une quelconque des revendications précédentes, dans laquelle la poche ou fente (8) s'étend à travers la surface linguale ou palatine (2) de la dent (1).

10. Ensemble de dents (1) comprenant une pluralité de dents (1) selon l'une quelconque des revendications précédentes ; éventuellement dans lequel l'ensemble de dents comprend des dents supérieures et/ou inférieures.

11. Ensemble de dents (1) selon la revendication 10, dans lequel l'ensemble de dents (1) comprend une ou plusieurs dents parmi des dents centrales, latérales, des canines, des premières prémolaires, des secondes prémolaires, des premières molaires et des secondes molaires.

12. Procédé de fabrication d'une dent (1) selon l'une quelconque des revendications 1 à 9, dans lequel le procédé comprend l'étape de moulage d'une dent ayant une poche ou fente (8) définie en son sein ou d'impression en trois dimensions d'une dent (1) ayant une poche ou fente (8) définie en son sein, ou le fraisage d'une dent (1) ayant une poche ou fente (8) définie en son sein, ou les étapes de moulage ou d'impression en trois dimensions d'une dent (1) et de fraisage d'une poche ou fente (8) dans la dent.

13. Prothèse dentaire comprenant une plaque de prothèse dentaire et une ou plusieurs dents (1) selon l'une quelconque des revendications 1 à 9.

14. Procédé de positionnement correct de dents (1) dans une prothèse dentaire qui comprend la fourniture d'une ou de plusieurs dents (1) selon l'une quelconque des revendications 1 à 9 et d'une plaque de prothèse dentaire et l'alignement des dents (1) avec la plaque de prothèse dentaire.
